# EUROPEAN PATENT APPLICATION

(11) **EP 4 742 473 A1**
(43) Date of publication of application: **13.05.2026**
(21) Application number: 23945004.2
(22) Date of filing: 07.07.2023
(51) Int. Cl.: H02G 5/06, H02B 13/045

(54) **INSULATION DEVICE**

(71) Applicant: MITSUBISHI ELECTRIC CORPORATION, Chiyoda-ku Tokyo 100-8310 (JP)
(72) Inventor: MIYASHITA, Makoto, Tokyo 100-8310 (JP)
(74) Representative: Witte, Weller & Partner Patentanwälte mbB
(86) International application number: PCT/JP2023/025256
(87) International publication number: WO 2025/013121

(57) **Abstract**

An insulator (50) in which a high-voltage conductor (3) is supported by an insulating spacer (2) in a tank (10) in which an insulating medium is enclosed, includes an electric field relaxation shield (4) installed in a portion of the high-voltage conductor (3) adjacent to the insulating spacer (2), in which the electric field relaxation shield (4) includes a conductive portion (41) that has a cylindrical shape covering the high-voltage conductor (3) from a radially outer side and is electrically connected to the high-voltage conductor (3), and a semiconductive portion (42) that has a cylindrical shape covering the conductive portion (41) from a radially outer side.

## Description

### Field

The present disclosure relates to an insulator in which a high-voltage conductor is installed in a tank filled with an insulating medium.

### Background

As an insulator that causes a current to flow in a high-voltage conductor installed in a tank filled with an insulating medium, an insulation opening/closing device including a breaker that can cut off the current flowing in the high-voltage conductor can be exemplified, in addition to an insulated bus that is installed between devices and electrically connects the devices with a high-voltage conductor.

In the insulator, the tank is divided into a plurality of spaces by an insulating spacer. The high-voltage conductor is supported by the insulating spacer in each of the divided spaces. In the high-voltage conductor disposed in each of the divided spaces, an electric field on a surface having contact with the insulating medium is increased, in a portion close to the insulating spacer. Therefore, there is a possibility that discharge occurs due to a short circuit between the high-voltage conductor and the tank. Therefore, in the insulator, it has been necessary to increase a size of the tank and increase a distance between the high-voltage conductor and the tank, in order to prevent the short circuit.

Patent Literature 1 discloses an insulator in which an electric field relaxation shield formed of an insulation substance is installed on a surface of a portion close to an insulating spacer, in a high-voltage conductor. In the insulator disclosed in Patent Literature 1, by providing the electric field relaxation shield on the surface of the portion close to the insulating spacer, in the high-voltage conductor, a strength of an electric field of the electric field relaxation shield surface is caused to be lower than a strength of an electric field of a surface of a high-voltage conductor in a shieldless insulator. As a result, since the discharge is less likely to occur between the electric field relaxation shield and the tank in the insulator disclosed in Patent Literature 1, it is possible to reduce a size of the tank and miniaturize the device.

### Citation List

### Patent Literature

Patent Literature 1: Japanese Patent Application Laid-open No. 2013-172561

### Summary of Invention

### Problem to be solved by the Invention

In a case where an electric field relaxation shield is formed of an insulation substance on a surface of a high-voltage conductor, there is a possibility that voids are mixed into the insulation substance, cracks are generated in the insulation substance, and peeling occurs in a contact portion between the high-voltage conductor and the insulation substance so that an air gap is generated in the insulation substance forming the electric field relaxation shield. When an AC voltage is applied to the insulation substance including the air gap such as the void, the crack, or the peeling, partial discharge occurs in the air gap. The partial discharge occurred in the air gap in the insulation substance eventually becomes electric tree discharge, causes the discharge to progress in the insulation substance, and gradually lowers an insulation performance of the insulation substance. Since the insulation performance of the insulation substance has a non-self-restoring property that does not perform self-restoration, the insulation performance finally causes electrical insulation breakdown. Therefore, the air gap in the insulation substance becomes a defect for lowering the insulation performance. In the insulator disclosed in Patent Literature 1, the electric field relaxation shield is formed of the insulation substance. Therefore, in a case where there is the defect in the insulation substance, if the insulation performance of the electric field relaxation shield is lowered by the application of the AC voltage and the insulation breakdown occurs, a function of the electric field relaxation effect by the electric field relaxation shield is lost. If the function of the electric field relaxation effect is lost due to the insulation breakdown, not only an electric field relaxation shield effect for an AC voltage, but also an electric field relaxation shield effect sometimes impaired when a lightning impulse voltage is applied.

The present disclosure has been made in view of the above, and an object of the present disclosure is to obtain an insulator that suppresses a relaxation function of an electric field relaxation shield from being impaired by insulation breakdown.

### Means to Solve the Problem

To solve the above problems and achieve the object, an insulator according to the present disclosure is an insulator in which a high-voltage conductor is supported by an insulating spacer in a tank in which an insulating medium is enclosed. The insulator includes: an electric field relaxation shield installed in a portion of the high-voltage conductor adjacent to the insulating spacer. The electric field relaxation shield includes: a conductive portion that has a cylindrical shape covering the high-voltage conductor from a radially outer side and is electrically connected to the high-voltage conductor; and a semiconductive portion that has a cylindrical shape covering the conductive portion from a radially outer side.

### Effects of the Invention

According to the present invention, an effect is achieved that an insulator is obtained that suppresses an electric field relaxation function of an electric field relaxation shield from being impaired by insulation breakdown.

### Brief Description of Drawings

FIG. 1 is a cross-sectional view illustrating a configuration of an insulator according to a first embodiment.
FIG. 2 is a diagram illustrating an example of an electric field distribution when a high-frequency AC voltage is applied to a high-voltage conductor of the insulator according to the first embodiment.
FIG. 3 is a diagram illustrating an example of an electric field distribution when a low-frequency AC voltage is applied to the high-voltage conductor of the insulator according to the first embodiment.
FIG. 4 is a cross-sectional view illustrating a configuration of an insulator according to a second embodiment.
FIG. 5 is a cross-sectional view illustrating a configuration of an insulator according to a third embodiment.
FIG. 6 is a perspective view of an electric field relaxation shield of the insulator according to the third embodiment.

### Description of Embodiments

Hereinafter, an insulator according to embodiments will be described in detail with reference to the drawings.

### First Embodiment.

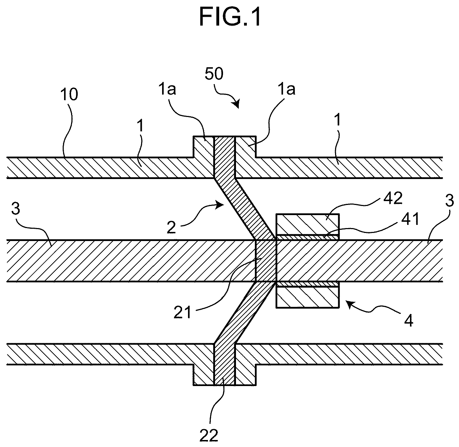

FIG. 1 is a cross-sectional view illustrating a configuration of an insulator according to a first embodiment. An insulator 50 according to the first embodiment includes: a tank 10 configured by coupling a plurality of metal containers 1; an insulating spacer 2 sandwiched between flanges 1a formed at end portions of the metal containers 1 and installed between the metal containers 1; and a high-voltage conductor 3 supported by the insulating spacer 2 in the tank 10.

The inside of the tank 10 is filled with an insulating medium. The insulating medium filled in the tank 10 is any one of: insulation gas; insulation liquid such as insulation oil; or a solid insulation substance such as an epoxy resin. That is, the insulator 50 according to the first embodiment is: a gas insulator of which the insulating medium is the insulation gas; a fluid insulator of which the insulating medium is the insulation liquid; or a solid insulator of which the insulating medium is a solid insulating body. Note that, as examples of the insulation gas, chlorofluorocarbon gas containing sulfur hexafluoride, dry air, gas which is a component of dry air such as oxygen, nitrogen, or carbon dioxide, and mixed gas obtained by combining these can be exemplified.

The insulating spacer 2 has a disk-like shape including: a central conductor portion 21; and an insulating supporting portion 22 surrounding the central conductor portion 21. An outer edge portion of the insulating supporting portion 22 is sandwiched by the flange 1a. The central conductor portion 21 is electrically connected to the high-voltage conductor 3.

In a portion of the high-voltage conductor 3 adjacent to the insulating spacer 2, an electric field relaxation shield 4 is formed. The electric field relaxation shield 4 includes: a cylindrical conductive portion 41 electrically connected to the high-voltage conductor 3; and a cylindrical semiconductive portion 42 covering the conductive portion 41. The conductive portion 41 is formed of a conductive material, and the semiconductive portion 42 is formed of a semiconductive material. Here, a substance of which a resistance value is less than 1.0×10⁶Ω/cm³ is defined as the conductive material; a substance of which a resistance value is equal to or more than 1.0×10⁶Ω/cm³ and less than 1.0×10¹¹Ω/cm³ is defined as the semiconductive material; and a substance of which a resistance value is equal to or more than 1.0×10¹¹Ω/cm³ is defined as an insulation material.

The conductive portion 41 is, for example, a coating layer including a conductive material formed on a surface of the high-voltage conductor 3. A resistance value R2 of the conductive portion 41 is less than 1.0×10⁶Ω/cm³.

A resistance value R1 of the semiconductive portion 42 is equal to or more than 1.0×10⁶Ω/cm³ and equal to or less than 1.0×10¹¹Ω/cm³.

An action of the electric field relaxation shield 4 of the insulator 50 according to the first embodiment will be described. The semiconductive portion 42 can be regarded as an equivalent circuit in which cylindrical capacitors having the resistance value R1 and a capacitance C are connected in parallel when replaced with an electric equivalent circuit. A capacitance X1 of the semiconductive portion 42 is expressed by X1=1/(2πfₐC), when a frequency of an AC voltage applied to the high-voltage conductor 3 is fₐ. Here, in a case where the resistance value R1 is a value equal to or more than 1.0×10⁶Ω/cm³ and equal to or less than 1.0×10¹¹Ω/cm³, an AC voltage having a frequency satisfying R1≤X1 is defined as a low-frequency AC voltage, and an AC voltage having a frequency satisfying R1>X1 is defined as a high-frequency AC voltage. Furthermore, in the following description, an AC voltage supplied from a commercial power supply is set as an example of the low-frequency AC voltage, and a lightning impulse voltage including a high-frequency component such as a lightning impulse exceeding 100 kHz is set as an example of the high-frequency AC voltage. Although the low-frequency AC voltage supplied from the commercial power supply is, for example, an AC voltage of 50 Hz or 60 Hz, the frequency may be different from the exemplified value.

In a case where the high-frequency AC voltage is applied to the high-voltage conductor 3, the capacitance X1 becomes smaller than the resistance value R1, due to a relationship of R1>X1=1/(2πf₁C). Therefore, a function as a capacitance of the semiconductive portion 42 becomes dominant. In other words, the semiconductive portion 42 functions as an insulating body for the lightning impulse.

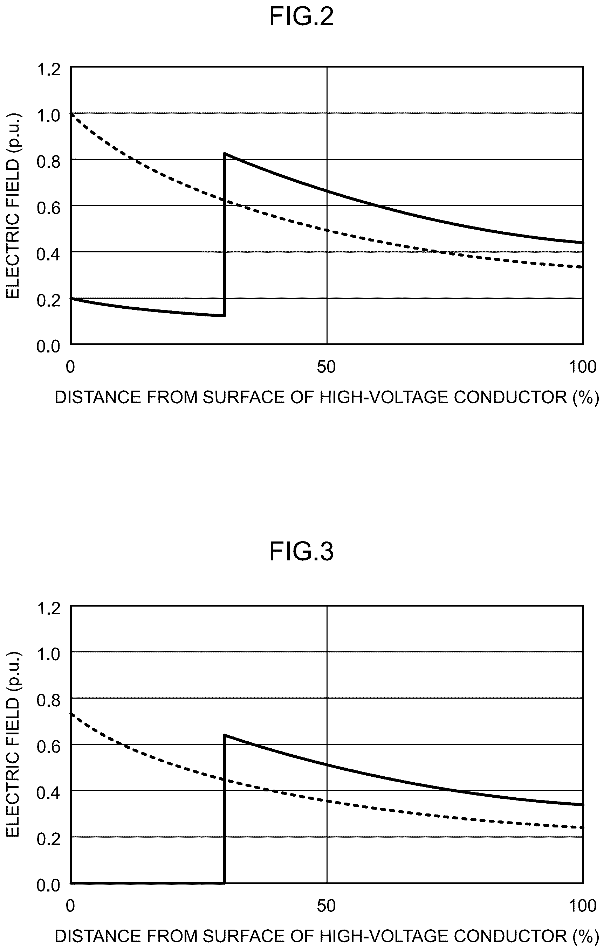

FIG. 2 is a diagram illustrating an example of an electric field distribution when the high-frequency AC voltage is applied to the high-voltage conductor of the insulator according to the first embodiment. The vertical axis indicates a strength of an electric field, and the horizontal axis indicates a distance from the surface of the high-voltage conductor 3. Note that the vertical axis indicates the strength of the electric field as a ratio with the strength of the electric field when the high-frequency AC voltage is applied to the high-voltage conductor 3, as a reference value. Furthermore, the horizontal axis indicates the distance from the surface of the high-voltage conductor 3 as a percentage with a distance from the surface of the high-voltage conductor 3 to the tank 10, as a reference. That is, in FIG. 2, a position where the distance from the surface of the high-voltage conductor 3 is 0% indicates the surface of the high-voltage conductor 3, a position where the distance from the surface of the high-voltage conductor 3 is 100% indicates an inner surface of the tank 10, and a position where the distance from the surface of the high-voltage conductor 3 is 50% indicates an intermediate position between the surface of the high-voltage conductor 3 and the inner surface of the tank 10. Furthermore, in FIG. 2, an electric field distribution when a high-frequency AC voltage is applied to a high-voltage conductor of an insulator according to a first comparative example of the first embodiment that does not include the electric field relaxation shield 4 is also illustrated. A solid line in FIG. 2 indicates the electric field distribution when the high-frequency AC voltage is applied to the high-voltage conductor 3 of the insulator 50 according to the first embodiment, and a broken line in FIG. 2 indicates the electric field distribution when the high-frequency AC voltage is applied to the high-voltage conductor of the insulator according to the first comparative example of the first embodiment.

It is assumed that a surface of the electric field relaxation shield 4 be located at a position of 30 mm from the surface of the high-voltage conductor 3. Therefore, a location where the distance from the surface of the high-voltage conductor 3 is equal to or shorter than 30 mm is inside of the electric field relaxation shield 4, and a location where the distance from the surface of the high-voltage conductor 3 exceeds 30 mm is outside the electric field relaxation shield 4. Because the semiconductive portion 42 functions as an insulating body for a high-frequency AC voltage having a frequency f₁, in the insulator 50 according to the first embodiment, an electric field is also generated in the electric field relaxation shield 4. Due to a graded insulation effect caused by the generation of the electric field in the electric field relaxation shield 4, a maximum value of an electric field generated between the surface of the electric field relaxation shield 4 and the tank 10 is smaller than a maximum value of an electric field generated between the surface of the high-voltage conductor and the tank in the insulator according to the first comparative example of the first embodiment.

Here, an insulator in which a portion corresponding to the semiconductive portion 42 of the insulator 50 according to the first embodiment includes a conductive material is set as a second comparative example of the first embodiment. In the insulator according to the second comparative example of the first embodiment, a portion corresponding to the semiconductive portion 42 of the insulator 50 according to the first embodiment functions as a resistor even if the high-frequency AC voltage is applied to the high-voltage conductor. Hereinafter, the portion corresponding to the semiconductive portion 42 of the insulator 50 according to the first embodiment, in the insulator according to the second comparative example of the first embodiment is referred to as a "resistor portion". In the insulator according to the second comparative example of the first embodiment, when the high-frequency AC voltage is applied to the high-voltage conductor, the electric field is not generated in the electric field relaxation shield, and the graded insulation effect does not occur. Therefore, as compared with the insulator according to the first embodiment, the insulator according to the second comparative example of the first embodiment in which the resistor portion includes the conductive material has a smaller effect of reducing the maximum value of the electric field, in a case where the high-frequency AC voltage is applied to the high-voltage conductor.

Next, a case will be described where a low-frequency AC voltage having a frequency f₂ is applied to the high-voltage conductor 3 of the insulator 50 according to the first embodiment. Since the resistance value R1 becomes equal to or less than the capacitance X1, due to the relationship of R1≤X1=1/(2πf₂C), the semiconductive portion 42 functions as a resistor for the low-frequency AC voltage.

FIG. 3 is a diagram illustrating an example of an electric field distribution when a low-frequency AC voltage is applied to the high-voltage conductor of the insulator according to the first embodiment. The vertical axis indicates a strength of an electric field, and the horizontal axis indicates a distance from the surface of the high-voltage conductor 3. Furthermore, the horizontal axis indicates the distance from the surface of the high-voltage conductor 3 as a percentage with a distance from the surface of the high-voltage conductor 3 to the tank 10, as a reference. That is, in FIG. 3, the position where the distance from the surface of the high-voltage conductor 3 is 0% indicates the surface of the high-voltage conductor 3, the position where the distance from the surface of the high-voltage conductor 3 is 100% indicates the inner surface of the tank 10, and the position where the distance from the surface of the high-voltage conductor 3 is 50% indicates the intermediate position between the surface of the high-voltage conductor 3 and the inner surface of the tank 10. Note that the vertical axis indicates the strength of the electric field as the ratio with the strength of the electric field when the high-frequency AC voltage is applied to the high-voltage conductor 3 illustrated in FIG. 2, as the reference value. Furthermore, in FIG. 3, an electric field distribution when the low-frequency AC voltage is applied to the high-voltage conductor 3 of the insulator according to the first comparative example of the first embodiment that does not include the electric field relaxation shield is also illustrated. A solid line in FIG. 3 indicates an electric field distribution when the low-frequency AC voltage is applied to the high-voltage conductor 3 of the insulator 50 according to the first embodiment, and a broken line in FIG. 3 indicates the electric field distribution when the low-frequency AC voltage is applied to the high-voltage conductor of the insulator according to the first comparative example of the first embodiment. Note that the broken line in FIG. 3 indicates the electric field distribution when the low-frequency AC voltage is applied to the high-voltage conductor of the insulator according to the first comparative example of the first embodiment. Therefore, the strength of the electric field on the surface of the high-voltage conductor 3 is different from that in a case where the high-frequency AC voltage illustrated in FIG. 2 is applied.

As in FIG. 2, it is assumed that the surface of the electric field relaxation shield 4 be located at the position of 30 mm from the surface of the high-voltage conductor 3. Therefore, the location where the distance from the surface of the high-voltage conductor 3 is equal to or shorter than 30 mm is inside of the electric field relaxation shield 4, and the location where the distance from the surface of the high-voltage conductor 3 exceeds 30 mm is outside the electric field relaxation shield 4. Since the semiconductive portion 42 functions as the resistor for the low-frequency AC voltage with the frequency f₂, in the insulator 50 according to the first embodiment, inside of the electric field relaxation shield 4 has the same potential as the high-voltage conductor 3, and an electric field in the electric field relaxation shield 4 is 0. Therefore, in the insulator 50 according to the first embodiment, the electric field is generated only between the surface of the electric field relaxation shield 4 and the tank 10. On the other hand, in the insulator according to the first comparative example of the first embodiment, the electric field is generated in an entire space between the surface of the high-voltage conductor and the tank. Since the insulator according to the first embodiment includes the electric field relaxation shield 4, the maximum value of the electric field is smaller than that of the insulator according to the first comparative example of the first embodiment.

Here, an insulator in which a portion corresponding to the semiconductive portion 42 of the insulator 50 according to the first embodiment includes an insulation material of which a resistance value is equal to or more than 1.0×10¹¹Ω/cm³ is set as a third comparative example of the first embodiment. An insulating body portion of the insulator according to the third comparative example of the first embodiment functions as an insulating body even if the low-frequency AC voltage is applied to the high-voltage conductor. Hereinafter, the portion corresponding to the semiconductive portion 42 of the insulator 50 according to the first embodiment, in the insulator according to the third comparative example of the first embodiment is referred to as an "insulating body portion". In the insulator according to the third comparative example of the first embodiment, an electric field is generated in the insulating body portion, when the low-frequency AC voltage is applied to the high-voltage conductor. In a case where an air gap such as a void exists in the insulating body portion, when an electric field is applied to a portion of the air gap, partial discharge is caused in the air gap, and a pit-shaped erosion hole is formed around the air gap due to the partial discharge. Then, when the partial discharge is further caused in the air gap in a state where the erosion hole exists, an electric tree formed by growth of the erosion hole in a dendritic shape extends in an electric field direction, and when the electric tree reaches an interface with the high-voltage conductor, insulation breakdown occurs between the high-voltage conductor and the air gap. Therefore, in the insulator according to the third comparative example of the first embodiment in which the insulating body portion includes the insulation material, even in a case where the low-frequency AC voltage is applied to the high-voltage conductor, the partial discharge occurs in the air gap such as a void. Therefore, there is a possibility that an electric field relaxation effect of the electric field relaxation shield is impaired.

On the other hand, in the insulator 50 according to the first embodiment, when the low-frequency AC voltage is applied to the high-voltage conductor 3, the electric field is not generated in the electric field relaxation shield 4. Therefore, even if the air gap such as a void exists in an insulation substance when the low-frequency AC voltage is applied to the high-voltage conductor 3, the partial discharge is not caused. Therefore, in the insulator 50 according to the first embodiment, when the low-frequency AC voltage is applied to the high-voltage conductor 3, the electric field relaxation effect of the electric field relaxation shield is not impaired due to the air gap.

In this way, in the insulator 50 according to the first embodiment, when the high-frequency AC voltage is applied to the high-voltage conductor 3, the semiconductive portion 42 functions as the resistor. Therefore, the electric field generated between the surface of the electric field relaxation shield 4 and the tank 10 can be relaxed. In voltage specifications defined by IEC standards defined by the international electrotechnical commission (IEC), JEC standards defined by the Japanese electrotechnical committee (JEC) in The Institute of Electrical Engineers of Japan, or the like, the lightning impulse voltage is set to be higher than a peak value of the AC voltage of the commercial power supply. Therefore, if an electric field when the lightning impulse voltage is applied can be relaxed, the device can be miniaturized. Therefore, in the insulator according to the first embodiment, it is possible to reduce the size of the tank 10 and miniaturize the device. Furthermore, since the electric field is not generated in the electric field relaxation shield 4 when the low-frequency AC voltage is applied to the high-voltage conductor 3, it is possible to suppress an electric field relaxation function of an insulation relaxation shield from being impaired by the insulation breakdown.

### Second Embodiment.

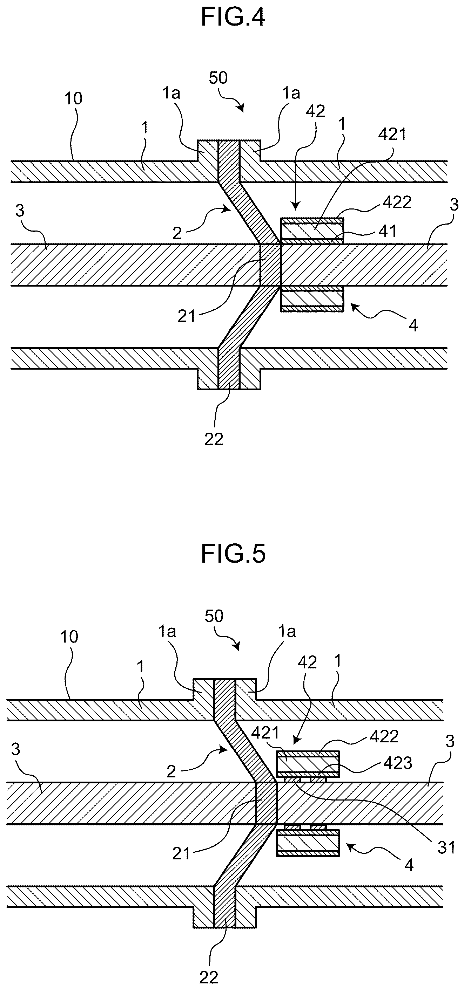

FIG. 4 is a cross-sectional view illustrating a configuration of an insulator according to a second embodiment. The insulator 50 according to the second embodiment is different from the insulator 50 according to the first embodiment in that the semiconductive portion 42 includes a cylindrical insulation substance 421 and a semiconductive coating layer 422 formed on a surface of the cylindrical insulation substance 421. The other configurations are similar to those of the insulator 50 according to the first embodiment. The semiconductive coating layer 422 includes a semiconductive material of which a resistance value is equal to or more than 10⁶Ω/cm³ and less than 10¹¹Ω/cm³.

The cylindrical insulation substance 421 is formed of an insulation material. As a material of the cylindrical insulation substance 421, an epoxy resin, plastic, rubber, and urethane foam can be exemplified. However, the material of the cylindrical insulation substance 421 is not limited to these.

In the insulator 50 according to the second embodiment, the semiconductive portion 42 includes the cylindrical insulation substance 421 and the semiconductive coating layer 422. Therefore, it is easier to form the semiconductive portion 42, as compared with the insulator 50 according to the first embodiment in which the semiconductive portion 42 is formed by molding a semiconductive material in a cylindrical shape.

### Third Embodiment.

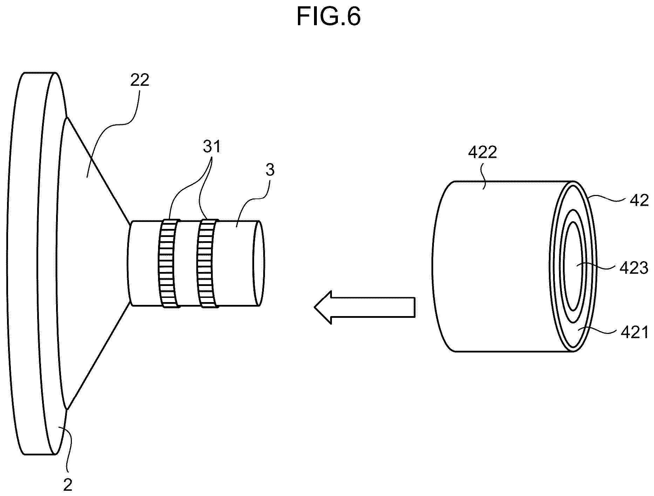

FIG. 5 is a cross-sectional view illustrating a configuration of an insulator according to a third embodiment. FIG. 6 is a perspective view of an electric field relaxation shield of the insulator according to the third embodiment. In the insulator 50 according to the third embodiment, a conductive material 31 is provided, in a portion of the high-voltage conductor 3 adjacent to the insulating spacer 2. The conductive material 31 is, for example, a finger contact formed of a plurality of rod-like conductors installed in a circumferential direction of the high-voltage conductor 3 with intervals. Note that the conductive material 31 may be a block fixed to a surface of the high-voltage conductor 3 or a wire wound around the surface of the high-voltage conductor 3. A semiconductive portion 42 includes the cylindrical insulation substance 421 and the semiconductive coating layer 422 formed on the surface of the cylindrical insulation substance 421. The conductive portion 41 includes a cylindrical embedded electrode 423 installed on an inner peripheral side of an insulation substance. Since the other configurations are similar to those of the insulator 50 according to the second embodiment, overlapping description is omitted.

By inserting the high-voltage conductor 3 into the semiconductive portion 42, the conductive material 31 installed in the high-voltage conductor 3 comes into contact with the embedded electrode 423, and the high-voltage conductor 3 and the embedded electrode 423 are electrically connected.

Since the insulator 50 according to the third embodiment can detachably fix the electric field relaxation shield 4 to the high-voltage conductor 3, the electric field relaxation shield 4 can be easily replaced.

### Fourth Embodiment.

Although the insulator 50 according to a fourth embodiment is similar to the insulator 50 according to the second embodiment illustrated in FIG. 4, the insulator 50 according to the fourth embodiment is different from the insulator 50 according to the second embodiment in that the cylindrical insulation substance 421 has a porous structure including microvoids. Since the other configurations are similar to those of the insulator 50 according to the second embodiment, overlapping description is omitted.

In the insulator 50 according to the fourth embodiment, the cylindrical insulation substance 421 has the porous structure including the microvoids. Therefore, a permittivity is lower than that of the insulator 50 according to the second embodiment. Therefore, the electric field on the surface of the electric field relaxation shield 4 is weaker than that of the insulator 50 according to the second embodiment. As a result, since an insulation performance for a high-frequency AC voltage is improved, a device size can be reduced.

In the above description, the insulator 50 in which the single-phase high-voltage conductor 3 is installed in the tank 10 has been described as an example. However, a structure may be implemented in which the high-voltage conductors 3 respectively corresponding to multiple phases are installed in the tank 10 in parallel.

In the above description, the AC voltage supplied from the commercial power supply has been described as an example of the low-frequency AC voltage. However, since a behavior of the semiconductive portion 42 in a case where a DC voltage is applied is similar to that in a case where the low-frequency AC voltage is applied, in a case of application to a direct-current power transmission system, the partial discharge does not occur in the air gap such as the void, and accordingly, the electric field relaxation effect of the electric field relaxation shield is not impaired. Furthermore, the lightning impulse voltage has been described as an example of a high-frequency voltage. However, since the semiconductive portion 42 functions as the insulating body in a case where another high-frequency AC voltage such as a surge voltage generated at the time of opening/closing in a disconnector is applied, the electric field generated between the surface of the electric field relaxation shield 4 and the tank 10 can be relaxed.

The configurations described in the above embodiments indicate an example of content and can be combined with other known techniques. Furthermore, the configurations described in the embodiments can be partially omitted or changed without departing from the scope.

### Reference Signs List

1 metal container; 1a flange; 2 insulating spacer; 3 high-voltage conductor; 4 electric field relaxation shield; 10 tank; 21 central conductor portion; 22 insulating supporting portion; 31 conductive material; 41 conductive portion; 42 semiconductive portion; 50 insulator; 421 cylindrical insulation substance; 422 semiconductive coating layer; 423 embedded electrode.

## Claims

1. An insulator in which a high-voltage conductor is supported by an insulating spacer in a tank in which an insulating medium is enclosed, the insulator comprising:
an electric field relaxation shield installed in a portion of the high-voltage conductor adjacent to the insulating spacer, wherein
the electric field relaxation shield includes:
a conductive portion that has a cylindrical shape covering the high-voltage conductor from a radially outer side and is electrically connected to the high-voltage conductor; and
a semiconductive portion that has a cylindrical shape covering the conductive portion from a radially outer side.

2. The insulator according to claim 1, wherein
the semiconductive portion includes a semiconductive material of which a resistance value is equal to or more than 10⁶Ω/cm³ and less than 10¹¹Ω/cm³.

3. The insulator according to claim 1, wherein
the semiconductive portion includes a cylindrical insulation substance and a semiconductive coating layer provided on an outer peripheral surface of the cylindrical insulation substance, and
the conductive portion is formed of a cylinder of a conductive material embedded in an inner peripheral surface of the cylindrical insulation substance.

4. The insulator according to claim 3, wherein
the semiconductive coating layer includes a semiconductive material of which a resistance value is equal to or more than 10⁶Ω/cm³ and less than 10¹¹Ω/cm³.

5. The insulator according to claim 3, comprising
a conductive material installed on a surface of the high-voltage conductor, wherein
the conductive portion is electrically connected to the high-voltage conductor via the conductive material.

6. The insulator according to claim 3, wherein
the cylindrical insulation substance has a porous structure including microvoids.
